(19) Europäisches Patentamt

European Patent Office

Office européen des brevets

(11) **EP 1 114 219 B1**

(12) **FASCICULE DE BREVET EUROPEEN**

(45) Date de publication et mention
de la délivrance du brevet:
**15.10.2003 Bulletin 2003/42**

(21) Numéro de dépôt: **99903781.5**

(22) Date de dépôt: **18.02.1999**

(51) Int Cl.$^7$: **D21H 17/70**, C01F 11/18,
D21C 9/00, D21C 5/02

(86) Numéro de dépôt international:
**PCT/FR99/00366**

(87) Numéro de publication internationale:
**WO 99/042657 (26.08.1999 Gazette 1999/34)**

(54) **PROCEDE DE SYNTHESE DE CARBONATE DE CALCIUM, PRODUIT OBTENU**

VERFAHREN ZUR SYNTHESE VON KALZIUMCARBONAT UND HERGESTELLTES PRODUKT

CALCIUM CARBONATE SYNTHESIS METHOD AND RESULTING PRODUCT

(84) Etats contractants désignés:
**AT BE CH DE DK ES FI FR GB IT LI NL PT SE**

(30) Priorité: **20.02.1998 FR 9802097**
**20.02.1998 FR 9802096**

(43) Date de publication de la demande:
**11.07.2001 Bulletin 2001/28**

(73) Titulaire: **L'air Liquide, S.A. à Directoire et Conseil
de Surveillance pour l'Etude et l'Exploitation des
Procédés Georges Claude
75321 Paris Cedex 07 (FR)**

(72) Inventeur: **RICHARD, Christian
F-73000 Chambéry (FR)**

(74) Mandataire: **Vesin, Jacques et al
L'Air Liquide,
Service Propriété Intellectuelle,
75 Quai d'Orsay
75321 Paris Cedex 07 (FR)**

(56) Documents cités:
EP-A- 0 231 762          EP-A- 0 737 774
WO-A-90/09483          FR-A- 2 174 945
US-A- 2 033 452          US-A- 2 583 548
US-A- 5 096 539          US-A- 5 679 220

**Description**

La présente invention concerne un procédé de synthèse de carbonate de calcium au contact de fibres et le nouveau produit obtenu. Elle se rapporte plus particulièrement à un procédé pour l'obtention de fibres solidaires de particules de carbonate de calcium dans lequel les fibres à traiter sont mises au contact de moyens générateurs de gaz carbonique et d'au moins une composition contenant des ions $Ca^{++}$ pouvant réagir avec le gaz carbonique de manière à obtenir « in fine » une précipitation de carbonate de calcium « in situ » sur les fibres.

L'invention se rapporte également à un procédé d'élimination du carbonate de calcium des autres composés non solubles contenus dans différents milieux aqueux et provenant notamment des papiers à recycler et des boues de désencrage.

Il est bien connu dans les différents domaines concernés par les produits à base de fibres, parmi lesquels, le domaine de la pâte à papier qu'il convient d'apporter à celles-ci des charges, généralement minérales, afin de leur conférer certaines propriétés physiques. De plus, eu égard au coût élevé de la production et de la transformation des dites fibres, les charges se présentent comme un substitut meilleur marché permettant de diminuer le coût de fabrication des produits les contenant.

En particulier, dans le domaine de la papeterie, outre les économies engendrées, les charges confèrent au papier de nombreuses qualités parmi lesquelles : opacité et blancheur, densité et porosité, ainsi qu'imprimabilité et toucher.

L'opacité est une qualité essentielle pour le papier, tout spécialement pour les papiers destinés à l'impression et l'écriture où il est souhaitable que l'encre transparaisse aussi peu que possible au revers de la feuille. Pour l'imprimerie, et d'autres applications, on recherche aussi des qualités de blancheur que ne présentent pas toujours les fibres seules. Le papetier, dans ce cas, ajoute des charges.

Les charges sont en général des poudres minérales; elles sont ajoutées aux fibres avant la formation de la feuille de papier; on parle de charges ajoutées dans la masse lors de la fabrication de la suspension fibreuse qui alimente la machine à papier (lorsqu'elles sont ajoutées après que la feuille soit séchée, on parle de pigments ajoutés par enduction sur la feuille de papier séchée qui sort de la machine à papier, l'opération est appelée « le couchage »).

Généralement, les charges sont mélangées aux fibres lors de la fabrication de la suspension fibreuse. Synthétiques ou naturelles, elles sont préparées « ex situ », c'est-à-dire précipitées ou broyées, et tamisées avant d'être mises en oeuvre dans la papeterie.

Les principales charges naturelles sont le kaolin (silicate d'aluminium), le talc (silicate de magnésium) et le carbonate de calcium; les principales charges synthétiques sont l'oxyde de titane, l'hydroxyde d'aluminium, le mélange sulfate d'aluminium plus chaux appelé « blanc satin », et le carbonate de calcium précipité.

Les récents développements de collage du papier en milieu alcalin ont favorisé l'utilisation parmi ces différentes charges des carbonates de calcium tant naturels que précipités, les précipités prenant une part de plus en plus importante, non seulement grâce à leur blancheur plus élevée, mais aussi grâce à leurs caractéristiques morphologiques.

Les charges sont introduites en quantité variable selon les sortes de papier, entre 5 et 35 % en poids en moyenne. Il y a un intérêt économique à augmenter la teneur en charges lorsque le papier est vendu sur la base de son poids, ou par feuille: on substitue partiellement au coût élevé des fibres, le coût moindre des charges. Cependant une teneur trop élevée en charges affaiblit les performances mécaniques du papier, ce qui conduit les fabricants à utiliser des agents de liaison et de rétention; d'autres additifs chimiques sont aussi utilisés, parmi lesquels des agents de collage afin de diminuer la sensibilité de la feuille à l'eau, des agents de drainage pour faciliter l'écoulement au cours de la mise en forme de la feuille .

L'optimisation du taux de charges reposera essentiellement sur la forme et la répartition des cristaux minéraux dans les fibres. Leur pureté et leurs caractéristiques cristallographiques influeront sur les qualités du papier .

Le papier est donc un matériau composite dont la fabrication nécessite une suite d'étapes faisant appel à plusieurs technologies pour le mélange de matières premières aux propriétés physiques et chimiques très différentes, la formation d'une feuille humide par élimination d'eau, le séchage de la feuille humide, le traitement éventuel de la surface de la feuille, et le recyclage des eaux diverses issues du procédé, appelées « eaux blanches ».

Si les matières premières principales sont les fibres végétales et les charges, les additifs chimiques, produits chers pour la plupart, sont nécessaires au bon déroulement de chaque étape; en diminuer les quantités est donc un objectif pour le fabricant de papier.

Incorporer les charges aux fibres est une étape essentielle du processus de fabrication du papier. Face aux nombreuses difficultés rencontrées dans la réalisation de cette étape, différents procédés et produits ont été proposés en vue d'améliorer l'impact des charges, tant dans le procédé papetier que dans les qualités du produit fini. L'une des voies préconisées consiste à préparer « in situ », donc en présence de fibres, les charges, afin de mieux les retenir et répartir dans le matelas fibreux.

Il est ainsi connu de US-A-2583548 , un procédé consistant à imprégner des fibres de cellulose d'une solution contenant du chlorure de calcium, puis à faire réagir ce sel avec le carbonate de sodium selon la réaction de double décomposition de deux sels :

$$CaCl2 + Na_2CO_3 \rightarrow CaCO_3 + 2\,NaCl.$$

L'imprégnation du chlorure de calcium dans les fibres permet alors de précipiter le carbonate de calcium dans les fibres, ou autour des fibres. Le chlorure de sodium, produit secondaire issu de la réaction, doit être éliminé par lavage, ce qui complique la mise en oeuvre industrielle.

Il est aussi connu de US-A-5096539, un procédé décrivant selon ce même principe, une précipitation « in situ » du carbonate de calcium à partir de chlorure de calcium, ce procédé introduisant une étape de lavage des fibres avant l'ajout de carbonate de sodium afin d'éliminer le chlorure de calcium situé à l'extérieur des fibres et de précipiter plus spécifiquement le carbonate de calcium dans la partie creuse des fibres, le lumen. Ce procédé, s'il améliore la rétention et le maintien des propriétés mécaniques en favorisant le contact entre les fibres et donc les liaisons fibres/fibres (puisque la charge est à l'intérieur de celles-ci) fait appel à des lavages successifs qui limitent considérablement la portée industrielle de l'invention.

Il est également connu de la demande Japonaise J60-297382 un procédé de carbonatation d'hydroxyde de chaux selon la réaction :

$$Ca(OH)_2 + CO_2 \rightarrow CaCO_3 + H_2O$$

Dans ce procédé, de l'hydroxyde de chaux est mis en présence de fibres. L'hydroxyde de chaux est ajouté sous forme solide. Les fibres sont présentes sous forme d'une suspension, elles doivent présenter des fibrilles à leur surface afin de permettre de retenir ultérieurement le carbonate de calcium. L'ensemble est mélangé sous agitation pendant un temps de l'ordre d'une dizaine de minutes. Le gaz carbonique est alors insufflé sous agitation pour carbonater la chaux. Cette phase d'agitation est inévitable; elle assure l'uniformité de la réaction et la production de particules de carbonate de calcium uniformes. Le temps de réaction dépend de la proportion de chaux ajoutée et de la concentration du gaz carbonique; il est en général de l'ordre de 30 minutes. Ce procédé, s'il a l'avantage de ne pas nécessiter d'étape de lavage, reste complexe à mettre en oeuvre en continu. En particulier, lors de la première étape, il est nécessaire de préparer le lait de chaux au contact des fibres et surtout de fibrilles, en milieu relativement concentré et généralement, on ajoute en quantité pondérale, plus de chaux vive que de fibres. Dans la deuxième étape, très délicate à conduire, on a recours à une agitation très importante et déterminante pour que le gaz carbonique injecté dans la suspension de fibres et de chaux éteinte, puisse réagir avec l'hydroxyde de chaux, afin de former ensuite des amas de cristaux emprisonnant les fibrilles. Les fibres seront d'autant mieux solidarisées aux cristaux que ceux-ci seront en plus forte concentration.

Il est aussi connu de US-A-5223090, en application de cette même réaction:

$$Ca(OH)_2 + CO_2 \rightarrow CaCO_3 + H_2O.$$

Un procédé de synthèse de $CaCO_3$ « in situ » au contact de fibres cellulosiques dans lequel le calcium est ajouté à l'état pulvérulent sous forme de CaCO ou $Ca(OH)_2$ à des fibres creuses contenant de l'eau à l'intérieur et dans les parois. Selon ce procédé, les fibres ne peuvent en aucun cas se présenter sous la forme d'une suspension aqueuse de fibres au moment de l'ajout 'du gaz carbonique, celui-ci devant être ajouté en quantité suffisante pour assurer une complète réaction. Cette étape s'effectue nécessairement dans un réacteur, à des conditions de pression et d'agitation variables suivant la teneur en eau des fibres. Le produit ainsi obtenu à l'issue de cette réaction doit alors être transféré pour intégrer le processus papetier ou être utilisé comme additif. Selon ce procédé, et afin de faciliter le mélange de la chaux et des fibres, il peut être préférable de charger les fibres dans une suspension riche en eau, puis de centrifuger la dite suspension afin d'en éliminer l'eau avant de procéder à l'ajout du dioxyde de carbone en réacteur pressurisé.

Il est aussi connu de la demande de brevet français 2689530, un procédé d'obtention « in situ » de fibres chargées en carbonate de calcium dans lequel on observe de la même manière que pour les deux brevets précédemment cités l'application du schéma réactionnel impliquant les deux étapes successives suivantes: mise en contact des fibres et de l'hydroxyde de calcium, puis ajout de dioxyde de carbone. Le procédé décrit dans cette demande de brevet français possède les mêmes inconvénients que ceux du procédé décrit dans la demande japonaise J60-297382, c'est à dire : la nécessité d'utiliser une proportion de charges importante afin que les précipités de carbonate de calcium formés emprisonnent les fibrilles pour les solidariser, la nécessité de disposer d'une suspension contenant des fibres riches en fibrilles, mais aussi le recours à un dispositif puissant de mélange pour que le gaz injecté réagisse avec l'hydroxyde de chaux.

Tous les procédés décrits ci-dessus possèdent en outre l'inconvénient de ne pas permettre une purification des charges en vue d'améliorer la blancheur: il est en effet impossible dans ces procédés d'éliminer des impuretés colorées éventuellement présentes dans le bain qui viendront donc se déposer sur la fibre, en même temps que le carbonate, et limiteront donc la blancheur du papier ainsi obtenu.

Les procédés décrits ci-dessus ne sont pas directement applicables dans le processus papetier car ils ne peuvent pas s'intégrer dans le circuit actuel de fabrication, soit parce qu'ils nécessitent des phases de lavage complexes, soit parce qu'ils proposent des réactions chimiques délicates du type gaz/liquide/solide en présence de fibres.

A l'heure actuelle, il n'existe donc pas de procédé de préparation de carbonate de calcium « in situ » qui s'intègre simplement dans le processus papetier, qui permette d'obtenir un carbonate de calcium précipité « in situ » de grande blancheur et de granulométrie rigoureuse à partir d'une source de carbonate de calcium quelconque, ou qui s'applique à une suspension fibreuse dont la dilution est conforme à celle des suspensions qui alimentent la machine à papier.

D'une manière plus générale, il n'existe pas à l'heure actuelle de procédé permettant d'éliminer le carbonate de calcium dans un milieu aqueux et/ou de séparer ce carbonate de calcium des autres produits insolubles dans un milieu aqueux, notamment les boues de désencrage des vieux papiers ou provenant des papiers recyclés.

L'invention permet de résoudre notamment les problèmes posés.

Le procédé selon l'invention est caractérisé en ce qu'il comporte une étape de réalisation d'une première composition contenant du bicarbonate de calcium, une étape de réalisation d'une seconde composition contenant de l'hydroxyde de calcium, une étape de mélange des première et deuxième compositions ainsi que des fibres à traiter de manière à engendrer la précipitation du carbonate de calcium au contact d'au moins certaines fibres.

De préférence, le bicarbonate de calcium contenu dans la première composition est obtenu par traitement de carbonate de calcium par du dioxyde de carbone.

Selon une première variante de l'invention, les ions $Ca^{++}$ proviennent pour au moins une partie d'une eau chargée en carbonate de calcium.

Selon une autre variante de l'invention, les ions $Ca^{++}$ proviennent pour au moins une partie d'une solution de chaux.

Afin d'éliminer les impuretés, la première et/ou la deuxième composition sont de préférence filtrées avant mélange.

Le carbonate de calcium utilisé pour préparer la première composition selon l'invention qui peut être d'origine quelconque, carbonate de calcium naturel de pureté indifférente, particules fines présentes dans des eaux de récupération ou toute autre provenance, est de préférence présent sous forme d'une suspension aqueuse contenant entre 0,5 g/l et 10 g/l, de préférence entre 1,5 g/l et 3 g/l et plus particulièrement 2 g/l.

De préférence, le dioxyde de carbone est injecté sous forme de gaz pur, ou dilué à une pression totale de l'ordre de la pression atmosphérique ou plus élevée.

De manière préférentielle, la seconde composition selon l'invention, est une suspension aqueuse de chaux, la concentration en hydroxyde de calcium étant comprise entre 1 g/l et 10 g/l, de préférence entre 1,5 g/l et 2,5 g/l et plus particulièrement 2 g/l (avant filtration). La concentration la plus judicieuse correspond à une concentration légèrement supérieure à la limite de solubilité de l'hydroxyde de calcium en milieu aqueux aux conditions de température et de pression mises en oeuvre, de telle sorte que la solution de chaux issue de la filtration ultérieure préférentielle soit saturée .

Selon une variante de l'invention, lors de l'utilisation d'une machine de fabrication de papier pour faire du papier à partir des fibres, la dite machine rejetant des eaux résiduaires dites « eaux blanches », la première composition comporte au moins une partie des « eaux blanches » issues de la machine de fabrication de papier.

Selon une autre variante de l'invention, lors de l'utilisation d'une machine de fabrication de papier pour faire du papier à partir des fibres, la dite machine rejetant des eaux résiduaires dites « eaux blanches », la seconde composition comporte au moins une partie des « eaux blanches » issues de la machine de fabrication de papier

De préférence, lors de l'utilisation d'une machine de fabrication de papier pour faire du papier à partir des fibres, la dite machine rejetant des eaux résiduaires, dites «eaux blanches», le procédé selon l'invention comporte une étape de séparation en deux parties des « eaux blanches » par filtration, la partie non filtrée étant dite « eaux chargées », la partie filtrée étant dite « eaux claires », une étape d'utilisation des « eaux chargées » pour fabriquer la première composition, une étape d'utilisation des « eaux claires » pour fabriquer la seconde composition. Les «eaux chargées» contiennent des particules de carbonate de calcium très fines, l'ajustement de la quantité de carbonate de calcium nécessaire est effectué par ajout de carbonate de calcium de qualité quelconque. La qualité de l'hydroxyde de chaux ajoutée aux « eaux claires » pour fabriquer la seconde composition est elle aussi quelconque.

Il est particulièrement avantageux dans le procédé selon l'invention dans lequel la première composition est une solution de bicarbonate de calcium, et la seconde composition est une solution d'eau de chaux, de filtrer les dites compositions avant le mélange, de manière à éliminer notamment les résidus insolubles colorés avant la précipitation du carbonate de calcium et à obtenir un carbonate de calcium, d'une blancheur au moins égale à 95 (selon le degré de blancheur ISO).

Le procédé, selon l'invention, s'applique à tout type de fibres utilisées en papeterie, quels que soient leur nature et leur degré de raffinage.

De préférence, les fibres à traiter se présenteront sous la forme d'une suspension de fibres dans l'eau contenant entre 1 à 15 % en poids de fibres et plus préférentiellement, entre 5 et 10% en poids de fibres.

Le produit complexe obtenu selon le procédé de l'invention, contient des fibres et des charges cristallisées à leur contact, et est caractérisé en ce que les cristaux de carbonate de calcium sont fixés à la surface des fibres, ils sont unitaires et régulièrement répartis sur la totalité de la surface des fibres et non agglomérés ou regroupés en amas, ils sont réguliers et d'une taille comprise entre 0,5 et 5 μm.

Selon une variante de l'invention, le produit complexe est caractérisé en ce que sa teneur en carbonate de calcium est comprise entre 2 et 50 % en poids par rapport à la matière sèche totale et de préférence entre 2 et 20 %.

Selon une variante de l'invention, l'étape de formation du carbonate de calcium est réalisée en présence de fibres pour réaliser un précipité de carbonate de calcium "in situ" sur les fibres.

Selon une autre variante de l'invention, des particules solides inertes sont ajoutées à l'une des solutions après filtration et avant le mélange en tant qu'initiateur de croissance des grains de carbonate de calcium.

Selon une autre variante de l'invention, le carbonate de calcium est précipité "ex situ" en l'absence de support.

L'invention sera mieux comprise à l'aide des exemples de réalisation suivants, donnés à titre non limitatifs, conjointement avec les figures qui représentent :

La figure 1 est un schéma du procédé de synthèse de carbonate de calcium au contact de fibres dans le processus papetier.

Les figures 2 à 4 sont des vues au microscope électronique à balayage (MEB) du nouveau produit selon l'invention.

Les figures 5 à 7 sont des vues au microscope électronique à balayage d'un produit témoin.

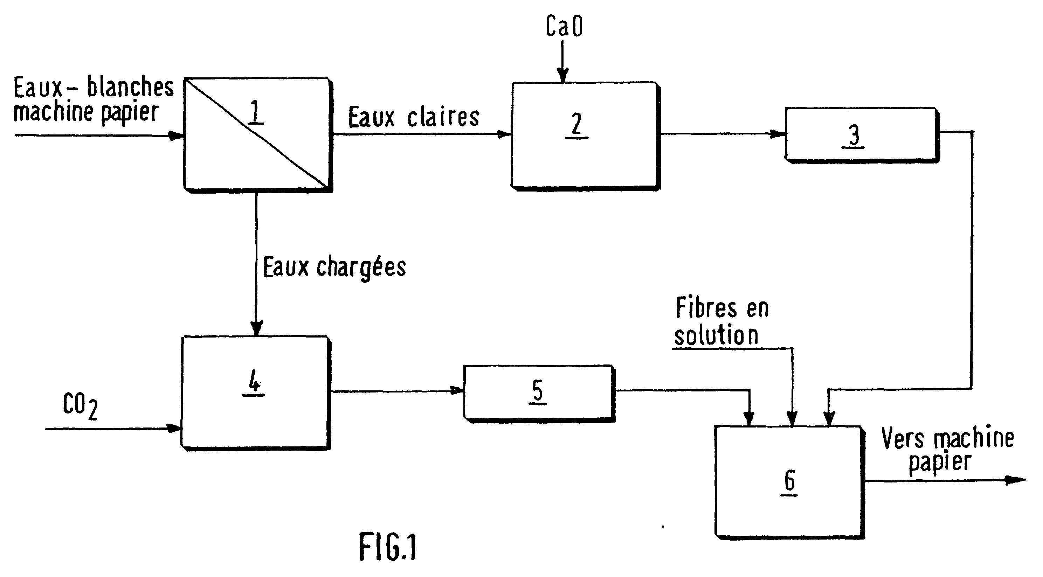

Le procédé de synthèse de carbonate de calcium au contact de fibres dans le processus papetier, selon le procédé de l'invention, est schématiquement représenté sur la figure 1.

Les « eaux blanches » sont séparées en deux parties par filtration dans le séparateur (1); la part filtrée exempte de carbonate de calcium forme les « eaux claires », la part non filtrée, enrichie en carbonate de calcium, forme les « eaux chargées ».

Les « eaux claires » sont utilisées pour fabriquer un lait de chaux. Pour cela, elles passent dans le mélangeur d'hydroxyde de calcium (2) où on ajoute de la chaux. La qualité de la chaux ajoutée peut être quelconque: chaux vive, chaux éteinte, résidus de four à chaux, ou de fours brûlant des déchets de papiers par exemple. La quantité de chaux est déterminée de telle sorte que le lait de chaux ait préférentiellement une concentration légèrement supérieure à la limite de solubilité de l'hydroxyde de chaux dans les conditions opératoires. Le lait de chaux est filtré dans le filtre d'eau de chaux (3) afin d'éliminer les impuretés provenant de la chaux ajoutée ainsi que les impuretés résiduelles pouvant provenir des eaux recyclées.

Les eaux chargées en carbonate de calcium sont ajustées en concentration dans le carbonateur (4) par ajout de carbonate de calcium de qualité quelconque. Elles sont traitées au $CO_2$ gazeux afin de transformer le carbonate de calcium insoluble en bicarbonate de calcium dont la solubilité est supérieure selon la réaction bien connue:

$$CaCO3 + CO_2 \; gaz + H_2O \rightarrow Ca(HCO_3)2.$$

On fabrique ainsi une solution saturée en bicarbonate de calcium (soluble), contenant de 1 à plus de 3g/l de $Ca(HCO_3)2$. La solution obtenue est filtrée dans le filtre bicarbonate (5) afin d'éliminer les impuretés insolubles, provenant tant des eaux recyclées que du carbonate de calcium ajouté, supprimant ainsi tout particulièrement les résidus insolubles colorés.

Selon un autre aspect de l'invention, on réalise un carbonate de calcium pur ou sensiblement pur, par transformation du carbonate de calcium non soluble contenu dans une solution de récupération quelconque en bicarbonate de calcium soluble, puis séparation d'un côté des particules, et de l'autre de la solution aqueuse contenant le bicarbonate, qui peut être ensuite précipité soit sur les fibres, soit « ex situ ». Ce mode d'obtention de carbonate de calcium permet ainsi la récupération du carbonate de calcium présent dans différents milieux aqueux liés (ou non) à la papeterie, provenant notamment des papiers à recycler et des boues de désencrage. Selon ce mode particulier de l'invention, le milieu aqueux contenant entre autres composés insolubles le carbonate de calcium, est traité au $CO_2$, puis filtré. La phase aqueuse contenant le bicarbonate de calcium peut être traitée pour fournir du carbonate de calcium qui sera ajouté dans le séparateur (1) ou pourra être utilisée par ailleurs et dans le cadre de l'invention; la phase aqueuse contenant le bicarbonate de calcium peut aussi après ajustement des concentrations, être ajoutée directement dans la cuve de cristallisation (6) ou être utilisée ailleurs et dans le cadre de l'invention.

Les filtrations ainsi réalisées sur les solutions contenant les ions calcium, permettront d'obtenir par la suite des cristaux de carbonate de calcium d'une grande blancheur.

Les fibres auxquelles s'applique le procédé proviennent de la machine à papier en amont du procédé, elles sont ici présentes sous la forme d'une suspension aqueuse, elles sont raffinées selon les caractéristiques finales demandées au papier. L'invention s'applique quel que soit le degré de raffinage.

Les solutions contenant le bicarbonate de calcium, l'hydroxyde de chaux ainsi que la suspension de fibres sont ensuite mélangées dans la cuve de cristallisation (6), en continu ou en discontinu selon les besoins et les facilités de la production. On fera varier la vitesse de mélange et le temps de mélange pour optimiser les formes cristallographiques.

La cristallisation du carbonate de calcium s'effectue alors au niveau des fibres, selon le schéma réactionnel suivant:

$$Ca(HCO_3)_2 \rightarrow CaCO3 + CO_2 + H_2O$$

le PH étant inférieur à 8, le $CO_2$ libéré lors de la réaction est immédiatement consommé en tout lieu où il apparaît par l'hydroxyde de calcium selon la réaction:

$$Ca(OH)_2 + 2\ CO_2 \rightarrow Ca(HCO_3)_2$$

soit :

$$Ca(OH)_2 + Ca(HCO_3)_2 \rightarrow 2CaCO_3 + 2H_2O$$

L'avantage du produit obtenu selon l'invention, outre les qualités de blancheur qui résultent des purifications par filtration, est mesuré par le taux de cristaux qui se fixent au contact des fibres et par les caractéristiques morphologiques des cristaux ainsi formés(et décrites ci-après).

EXEMPLE 1:

L'exemple suivant permet de mieux illustrer l'invention.
On prépare trois solutions:
Solution aqueuse A = 120 g contenant 9,60 grammes de fibres végétales, soit 80 g/l.
Solution aqueuse B = 970 g contenant 1,60 grammes de $Ca(OH)_2$, soit 1,60 g/l.
Solution aqueuse C = 1600 g contenant 3,5 grammes de $Ca(HCO_3)_2$, soit 2,2 g/l.
La solution B est préparée dans un bêcher contenant 2000 g d'eau. On ajoute 6 g de chaux vive CaO. On agite dix minutes à température ambiante. On filtre la solution pour éliminer les produits résiduels en suspension et par dilution, on ajuste le titre à 1,6 g/l de $Ca(OH)_2$. On prélève 970 g de cette solution.
La solution C est préparée dans un réacteur contenant 2000 g d'eau à température ambiante et munie d'une turbine autoaspirante. On ajoute 6 g de $CaCO_3$ broyé à 10 µm et, après fermeture du réacteur, on injecte sous une pression de 3 bars, du gaz $CO_2$ et on maintient cette pression durant 5 minutes. Ensuite, après décompression et léger vide pour éliminer le $CO_2$ dissous, on filtre cette solution pour éliminer les produits résiduels en suspension et par dilution, on ajuste le titre à 2,2 g/l de $Ca(HCO_3)_2$. On prélève à 1600 g de cette solution.
On mélange A + B + C dans un récipient sous agitation. Aucun additif autre n'est ajouté.
On prélève la quantité suffisante de suspension pour fabriquer une formette de papier selon la procédure bien connue de l'homme de métier.

On récupère après séchage la formette de papier et on dose le carbonate de calcium fixé aux fibres par rapport à la quantité de carbonate de calcium précipité lors du mélange des solutions B et C.
Le taux de carbonate de calcium fixé aux fibres est de 60 %. La formette contient 20,2 % en poids de carbonate de calcium.

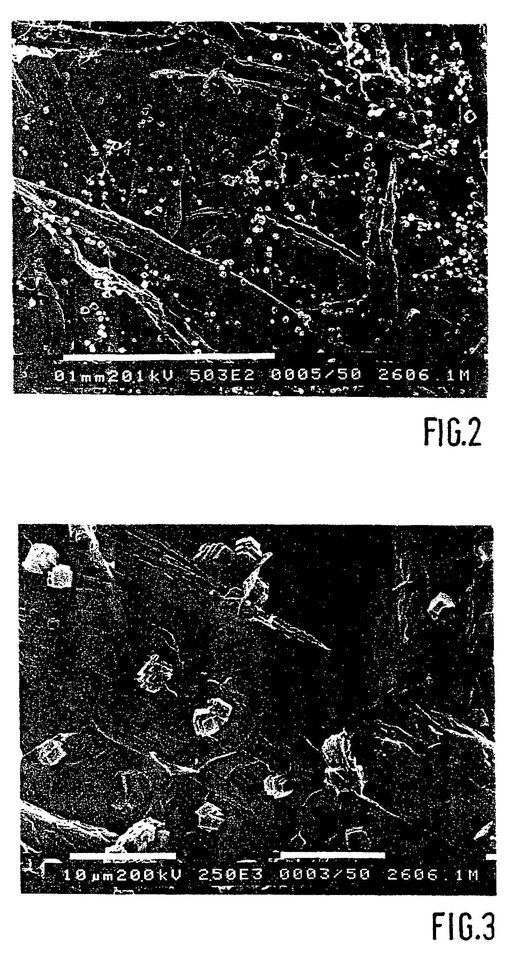

La figure 2 prise au microscope électronique à balayage à un grossissement de 503, montre que le nouveau produit selon l'invention se présente sous la forme d'une structure fibreuse composée de fibres élémentaires portant des cristaux de carbonate de calcium régulièrement répartis dans l'ensemble du produit, sans formation d'agglomérats ou amas.
La figure 3, prise avec un grossissement de 2500, montre que ces cristaux sont unitaires et fixés aux fibres. Leur taille est régulière, de l'ordre de 3 µm environ.

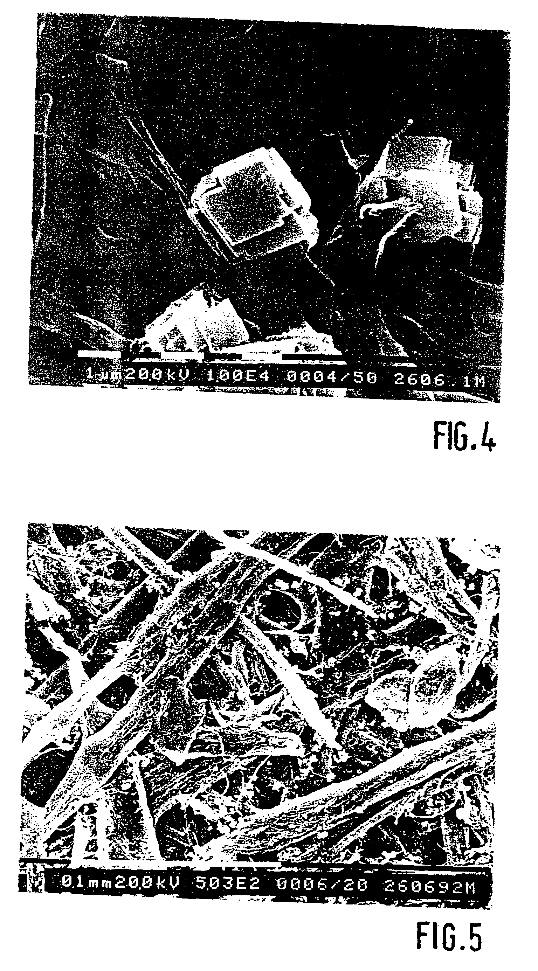

La figure 4, prise avec un grossissement de 10 000, illustre la croissance des cristaux. Ces cristaux sont ici de structure rhomboédrique.

EXEMPLE 2: exemple comparatif.

Cet exemple a été réalisé avec un carbonate de calcium commercial dit « précipité » d'origine SOLVAY, produit 92 E. Dans ce deuxième exemple, la charge est simplement mélangée avec les fibres selon la voie classique bien connue de l'homme de métier.
Solution aqueuse A = 120 g contenant 9,6 grammes de fibres végétales, soit 80 g/l.
Solution aqueuse B = 2570 g contenant 4,30 grammes de carbonate 92 E, soit 1,70 g/l.
On mélange A + B de la même manière que dans l'exemple 1 et on fabrique dans les mêmes conditions une formette de papier.
On récupère après séchage la formette de papier et on dose le carbonate de calcium retenu par les fibres par rapport à la quantité de carbonate de calcium précipité de la solution B.
Le taux de carbonate de calcium retenu par les fibres est de 15 %, sans additif chimique. La formette contient seulement 6 % en poids de carbonate de calcium.
La figure 5 prise au microscope électronique à balayage à un grossissement de 503, montre que le produit témoin se présente sous la forme d'une structure fibreuse composée de fibres élémentaires portant des agglomérats de cristaux de carbonate de calcium répartis de façon irrégulière dans l'ensemble du produit.

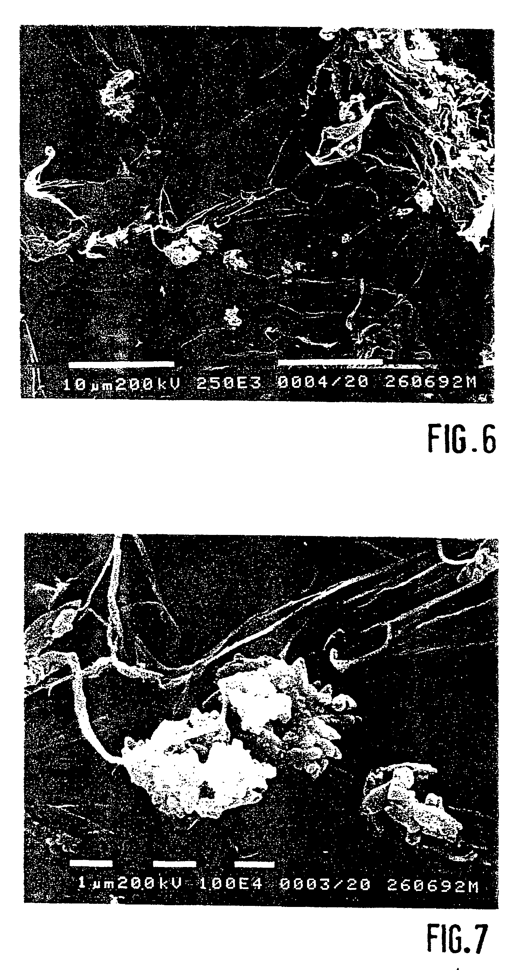

La figure 6 prise avec un grossissement de 2500, montre que les cristaux sont agglomérés, et de taille irrégulière.
La figure 7, prise avec un grossissement de 10 000, montre que les cristaux fortement agglomérés, emprisonnent les fibrilles. Ces cristaux sont, ici, de structure scalénoédrique.
Ces exemples illustrent l'intérêt de la voie bicarbonate selon l'invention par rapport à la voie classique :

Le taux de fixation du carbonate de calcium sur les fibres est supérieur lorsque l'on adopte la voie bicarbonate.

Les cristaux sont unitaires, fixés sur la paroi des fibres et non en amas ou agglomérés.

Les cristaux présentent une forme plutôt plane. Ils sont de taille uniforme. Cette taille varie entre 0,1 et 10 µm et, de préférence, entre 0,5 et 5 µm en fonction, principalement, de la vitesse de mélange, mais aussi de la concentration des solutions et de la température. Les cristaux sont plus petits lorsque la vitesse de mélange ou la température sont élevées ou lorsque la quantité de carbonate de calcium est faible.

Sans vouloir être liée par une quelconque théorie, la Demanderesse pense que contrairement à ce qui se passe dans le cas d'une précipitation « in situ » à partir d'hydroxyde de calcium seul, on observe dans le procédé selon l'invention que : partant de bicarbonate de calcium pour faire du carbonate , la réaction se produit dans des micro-domaines où le ph est acide (environ 6 au départ de la réaction) et au contact des fibres. On y assiste à une croissance de cristaux de carbonate de calcium à partir de germes présents sur et au creux des fibres. Cette hypothèse est confortée par le fait que les cristaux de carbonate de calcium selon l'invention se présentent sous la forme de cristaux plats caractéristiques d'un cristal obtenu à partir d'une solution sursaturée par croissance cristalline.

A l'opposé, dans le cas d'une précipitation de carbonate de calcium à partir de $Ca(OH)_2$, la réaction s'effectue en milieu basique et on observe une précipitation sur les fibres par liaison mécanique et non chimique donc par agglomération de cristaux unitaires plus petits tels que décrit dans la demande de brevet français 2689530 et non par une croissance cristalline.

Cette différence de structure du produit pourrait expliquer la meilleure rétention des charges dans les fibres.

Le procédé, selon l'invention, s'applique à toute pâte d'origine mécanique ou chimique, quelque soit son degré de raffinage. On peut également l'appliquer aux pâtes recyclées (totalement ou partiellement): les fibres ou mélange de fibres, recyclées ou non, doivent être mises en solution de la manière décrite ci avant, pour être introduites au niveau de la cuve de cristallisation (6).

En ce qui concerne l'aspect de l'invention relatif à l'élimination du carbonate de calcium ou à la séparation de celui-ci des autres insolubles, celui-ci découle des exemples ci-dessus:

Le carbonate de calcium présent dans les boues de désencrage ou autres est transformé en bicarbonate de calcium selon le procédé décrit ci-avant. Le bicarbonate étant soluble, il suffit de filtrer la solution pour obtenir d'un côté de l'eau contenant le bicarbonate solubilisé dans celle-ci et de l'autre, tous les insolubles retenus dans le filtre. Ceci permet de récupérer le carbonate en le faisant à nouveau précipiter et/ou de récupérer des boues sans carbonate de calcium selon l'usage que l'on veut faire de l'invention.

**Revendications**

1. Procédé pour l'obtention de fibres solidaires de particules de carbonate de calcium dans lequel les fibres à traiter sont mises au contact de moyens générateurs de gaz carbonique et d'au moins une composition contenant des ions $Ca^{++}$ pouvant réagir avec le gaz carbonique de manière à obtenir « in fine » une précipitation de carbonate de calcium « in situ » sur les fibres **caractérisé en ce qu'**il comporte :

   - une étape de réalisation d'une première composition contenant du bicarbonate de calcium.
   - une étape de réalisation d'une seconde composition contenant de l'hydroxyde de calcium.
   - une étape de mélange des première et deuxième compositions ainsi que des fibres à traiter de manière à engendrer la précipitation du carbonate de calcium au contact d'au moins certaines fibres.

2. Procédé selon la revendication 1, **caractérisé en ce que** le bicarbonate de calcium contenu dans la première composition est obtenu par traitement de carbonate de calcium par du dioxyde de carbone.

3. Procédé selon la revendication 1 ou 2, **caractérisé en ce que** les ions $Ca^{++}$ proviennent pour au moins une partie d'une eau chargée en carbonate de calcium.

4. Procédé selon l'une des revendications 1 à 3, **caractérisé en ce que** les ions $Ca^{++}$ proviennent pour au moins une partie d'une solution de chaux.

5. Procédé selon l'une des revendications 1 à 4, **caractérisé en ce que** la première composition est filtrée avant mélange.

6. Procédé selon l'une des revendications 1 à 5, **caractérisé en ce que** la seconde composition est filtrée avant mélange.

7. Procédé selon l'une des revendications 2 à 6, **caractérisé en ce que** le carbonate de calcium est présent sous forme d'une suspension aqueuse contenant entre 0,5 g/l et 10 g/l de préférence entre 1,5 g/l et 3 g/l et plus particulièrement 2 g/l.

**8.** Procédé selon l'une des revendications 2 à 7, **caractérisé en ce que** le dioxyde de carbone est injecté sous forme de gaz pur ou dilué à une pression totale de l'ordre de la pression atmosphérique ou plus élevée.

**9.** Procédé selon l'une des revendications 1 à 8, **caractérisé en ce que** la seconde composition est une suspension aqueuse de chaux, la concentration en hydroxyde de calcium étant comprise entre 1 g/l et 10 g/l, de préférence entre 1,5 g/l et 2,5 g/l et plus particulièrement 2 g/l (avant filtration).

**10.** Procédé selon l'une des revendications 1 à 9, **caractérisé en ce que** le bicarbonate de calcium contenu dans la première composition provient de la récupération de carbonate de calcium présent dans un milieu aqueux des papiers à recycler et des boues de désencrage, par traitement dudit milieu aqueux au dioxyde de carbone.

**11.** Procédé selon l'une des revendications 1 à 10, dans lequel on utilise une machine de fabrication de papier pour faire du papier à partir des fibres, la dite machine rejetant des eaux résiduaires dites « eaux blanches » **caractérisé en ce que** la première composition comporte au moins une partie des « eaux blanches » issues de la machine de fabrication de papier.

**12.** Procédé selon l'une des revendications 1 à 10, dans lequel on utilise une machine de fabrication de papier pour faire du papier à partir des fibres, la dite machine rejetant des eaux résiduaires dites « eaux blanches » **caractérisé en ce que** la seconde composition comporte au moins une partie des « eaux blanches » issues de la machine de fabrication de papier.

**13.** Procédé selon l'une des revendications 1 à 10, dans lequel on utilise une machine de fabrication de papier pour faire du papier à partir des fibres, la dite machine rejetant des eaux résiduaires dites « eaux blanches » **caractérisé en ce qu'**il comporte:

- une étape de séparation en deux parties des « eaux blanches » par filtration. La partie non filtrée est dite « eaux chargées », la partie filtrée est dite « eaux claires ».
- une étape d'utilisation des « eaux chargées » pour fabriquer la première composition.
- une étape d'utilisation des « eaux claires » pour fabriquer la seconde composition.

**14.** Procédé selon l'une des revendications 1 à 13, dans lequel la première composition est une solution de bicarbonate de calcium et la seconde composition est une solution d'eau de chaux **caractérisé en ce que** les dites compositions sont filtrées avant le mélange de manière à éliminer notamment les résidus insolubles colorés avant la précipitation du carbonate de calcium et à obtenir un carbonate de calcium d'une blancheur au moins égale à 95 (selon le degré de blancheur ISO).

**15.** Procédé selon l'une des revendications 1 à 14, **caractérisé en ce que** les fibres à traiter se présentent sous la forme d'une suspension de fibres dans l'eau contenant entre 1 à 15 % de fibres et plus particulièrement préférentiellement entre 5 et 10% en poids.

**16.** Produit complexe contenant des fibres et des charges cristallisées à leur contact, **caractérisé en ce qu'**il est obtenu à partir du procédé de l'une des revendications 1 à 15, et **en ce que** :

- les charges cristallisées au contact des fibres sont des cristaux de carbonate de calcium, fixés à la surface des fibres,
- lesdits cristaux sont unitaires et régulièrement répartis sur la totalité de la surface des fibres et non agglomérés ou regroupés en amas,
- lesdits cristaux sont réguliers et d'une taille comprise entre 0,1 et 10 $\mu$m et de préférence entre 0,5 et 5 $\mu$m.

**17.** Produit complexe selon la revendication 16, **caractérisé en ce que** sa teneur en carbonate de calcium est comprise entre 2 et 50% en poids par rapport à la matière sèche totale et de préférence entre 2 et 20%.

**18.** Produit complexe selon la revendication 16 ou 17, **caractérisé en ce qu'**il se présente sous la forme d'une feuille humide.

**19.** Application du produit selon l'une des revendications 16 à 18, à la production papiers chargés notamment de papiers impression écriture, papier journal, papier cigarette et papier fin.

**Patentansprüche**

**1.** Verfahren zur Herstellung von mit Calciumcarbonatteilchen fest verbundenen Fasern, bei dem die zu behandelnden Fasern mit Kohlengaserzeugungsmitteln und mindestens einer Zusammensetzung in Kontakt gebracht werden, die Ca$^{++}$-Ionen enthält, die mit dem Kohlengas reagieren können, um "in fine" einen Calciumcarbonatniederschlag "in situ" auf den Fasern zu erzielen, **dadurch gekenn-**

**zeichnet, dass** es umfasst:

- einen Schritt der Herstellung einer ersten Zusammensetzung, die Calciumbicarbonat enthält,

- einen Schritt der Herstellung einer zweiten Zusammensetzung, die Calciumhydroxid enthält,

- einen Schritt der Mischung der ersten und der zweiten Zusammensetzung sowie der behandelnden Fasern, um den Niederschlag des mit mindestens gewissen Fasern in Kontakt befindlichen Calciumcarbonats hervorzurufen.

2. Verfahren nach Anspruch 1, **dadurch gekennzeichnet, dass** das in der ersten Zusammensetzung enthaltene Calciumbicarbonat durch Behandlung von Calciumcarbonat mit Kohlendioxid erhalten wird.

3. Verfahren nach Anspruch 1 oder 2, **dadurch gekennzeichnet, dass** die Ca$^{++}$-Ionen zumindest zum Teil von einem mit Calciumcarbonat angereicherten Wasser stammen.

4. Verfahren nach einem der Ansprüche 1 bis 3, **dadurch gekennzeichnet, dass** die Ca$^{++}$-Ionen zumindest zum Teil aus einer Kalklösung stammen.

5. Verfahren nach einem der Ansprüche 1 bis 4, **dadurch gekennzeichnet, dass** die erste Zusammensetzung vor der Mischung gefiltert wird.

6. Verfahren nach einem der Ansprüche 1 bis 5, **dadurch gekennzeichnet, dass** die zweite Zusammensetzung vor der Mischung gefiltert wird.

7. Verfahren nach einem der Ansprüche 2 bis 6, **dadurch gekennzeichnet, dass** das Calciumcarbonat in Form einer wäßrigen Suspension, die zwischen 0,5 g/l und 10 g/l, vorzugsweise zwischen 1,5 g/l und 3 g/l, und insbesondere 2 g/l enthält.

8. Verfahren nach einem der Ansprüche 2 bis 7, **dadurch gekennzeichnet, dass** das Kohlendioxid in Form eines reinen oder verdünnten Gases bei einem Gesamtdruck von ungefähr dem Luftdruck oder höher eingespritzt wird.

9. Verfahren nach einem der Ansprüche 1 bis 8, **dadurch gekennzeichnet, dass** die zweite Zusammensetzung eine wäßrige Kalksuspension ist, wobei die Konzentration an Calciumhydroxid zwischen 1 g/l und 10 g/l, vorzugsweise zwischen 1,5 g/l und 2,5 g/l und insbesondere 2 g/l (vor der Filterung) beträgt.

10. Verfahren nach einem der Ansprüche 1 bis 9, **dadurch gekennzeichnet, dass** das in der ersten Zusammensetzung enthaltene Calciumbicarbonat aus der Wiedergewinnung von Calciumcarbonat, das in einem wäßrigen Medium der Recycling-Papiere und der De-ink-Rückstände vorhanden ist, durch Behandlung des wäßrigen Mediums mit Kohlendioxid stammt.

11. Verfahren nach einem der Ansprüche 1 bis 10, bei dem eine Maschine zur Papiererzeugung verwendet wird, um Papier aus Fasern herzustellen, wobei die Maschine Abwässer, "Bleiwässer" genannt, ausscheidet, **dadurch gekennzeichnet, dass** die erste Zusammensetzung mindestens einen Teil der "Bleiwässer", die von der Papiererzeugungsmaschine stammen, umfasst.

12. Verfahren nach einem der Ansprüche 1 bis 10, bei dem eine Maschine zur Papiererzeugung verwendet wird, um Papier aus Fasern herzustellen, wobei die Maschine Abwässer, "Bleiwässer" genannt, ausscheidet, **dadurch gekennzeichnet, dass** die zweite Zusammensetzung mindestens einen Teil der "Bleiwässer", die von der Papiererzeugungsmaschine stammen, umfasst.

13. Verfahren nach einem der Ansprüche 1 bis 10, bei dem eine Maschine zur Papiererzeugung verwendet wird, um Papier aus Fasern herzustellen, wobei die Maschine Abwässer, "Bleiwässer" genannt, ausscheidet, **dadurch gekennzeichnet, dass** es umfasst:

- einen Schritt der Trennung der "Bleiwässer" in zwei Teile durch Filterung. Der nicht gefilterte Teil wird "belastete Wässer" genannt, der gefilterte Teil wird "klare Wässer" genannt,

- einen Schritt der Verwendung der "belasteten Wässer" für die Herstellung der ersten Zusammensetzung,

- einen Schritt der Verwendung der "klaren Wässer" für die Herstellung der zweiten Zusammensetzung.

14. Verfahren nach einem der Ansprüche 1 bis 13, bei dem die erste Zusammensetzung eine Lösung von Calciumbicarbonat und die zweite Zusammensetzung eine Lösung von Kalkwasser ist, **dadurch gekennzeichnet, dass** die Zusammensetzungen vor der Mischung gefiltert werden, um insbesondere die unlöslichen Farbrückstände vor dem Niederschlag des Calciumcarbonats völlig zu beseitigen und ein Calciumcarbonat mit einer Weiße von mindestens gleich 95 (nach Weißegrad ISO) zu erhalten.

**15.** Verfahren nach einem der Ansprüche 1 bis 14, **dadurch gekennzeichnet, dass** die zu behandelnden Fasern in Form einer Suspension von Fasern in dem Wasser, das zwischen 1 bis 15 % Fasern und insbesondere vorzugsweise zwischen 5 und 10 Gew.% enthält, vorhanden sind.

**16.** Komplexes Produkt, das Fasern und mit ihnen in Kontakt befindliche kristallisierte Füllstoffe enthält, **dadurch gekennzeichnet, dass** es auf Basis des Verfahrens nach einem der Ansprüche 1 bis 15 erhalten wird, und dass:

- die mit den Fasern in Kontakt befindlichen kristallisierten Füllstoffe Kristalle von Calciumcarbonat sind, die an der Oberfläche der Fasern befestigt sind,

- die Kristalle einheitlich und regelmäßig auf der gesamten Oberfläche der Fasern verteilt und nicht zusammengeballt oder in Haufen gruppiert sind,

- die Kristalle regelmäßig und von einer Größe zwischen 0,1 und 10 µm und vorzugsweise zwischen 0,5 und 5 µm sind.

**17.** Komplexes Produkt nach Anspruch 16, **dadurch gekennzeichnet, dass** sein Gehalt an Calciumcarbonat zwischen 2 und 50 Gew.% bezogen auf die Gesamttrockenmasse und vorzugsweise zwischen 2 und 20 % beträgt.

**18.** Komplexes Produkt nach Anspruch 16 oder 17, **dadurch gekennzeichnet, dass** es in Form einer feuchten Folie vorhanden ist.

**19.** Anwendung des Produktes nach einem der Ansprüche 16 bis 18 für die Erzeugung von verstärkten Papieren, insbesondere Druck- und Schreibpapier, Zeitungspapier, Zigarettenpapier und Feinpapier.

**Claims**

**1.** Process for obtaining fibres integral with calcium carbonate particles, in which the fibres to be treated are contacted with carbon dioxide generator means and at least one composition comprising $Ca^{++}$ ions capable of reacting with the carbon dioxide so as to give "in fine" a precipitation of calcium carbonate "in situ" on the fibres, **characterized in that** it comprises:

- a step of preparing a first composition comprising calcium bicarbonate.
- a step of preparing a second composition comprising calcium hydroxide.

- a step of mixing the first and second compositions, and the fibres to be treated, so as to give rise to the precipitation of the calcium carbonate in contact with at least some fibres.

**2.** Process according to Claim 1, **characterized in that** the calcium bicarbonate present in the first composition is obtained by treating calcium carbonate with carbon dioxide.

**3.** Process according to Claim 1 or 2, **characterized in that** at least some of the $Ca^{++}$ ions originate from a calcium carbonate-loaded liquor.

**4.** Process according to one of Claims 1 to 3, **characterized in that** at least some of the $Ca^{++}$ ions originate from a lime solution.

**5.** Process according to one of claims 1 to 4, **characterized in that** the first composition is filtered before mixing.

**6.** Process according to one of claims 1 to 5, **characterized in that** the second composition is filtered before mixing.

**7.** Process according to one of claims 2 to 6, **characterized in that** the calcium carbonate is present in the form of an aqueous suspension containing between 0.5 g/l and 10 g/l, preferably between 1.5 g/l and 3 g/l and more particularly 2 g/l.

**8.** Process according to one of claims 2 to 7, **characterized in that** the carbon dioxide is injected in the form of pure gas or diluted to a total pressure of the order of atmospheric pressure or greater.

**9.** Process according to one of claims 1 to 8, **characterized in that** the second composition is an aqueous lime suspension, the calcium hydroxide concentration being between 1 g/l and 10 g/l, preferably between 1.5 g/l and 2.5 g/l and more particularly 2 g/l (before filtration).

**10.** Process according to one of claims 1 to 9, **characterized in that** the calcium bicarbonate present in the first composition originates from the recovery of calcium carbonate present in an aqueous medium from papers for recycling and deinking sludges, by treatment of the said aqueous medium with carbon dioxide.

**11.** Process according to one of claims 1 to 10, in which a papermaking machine is used to make paper from fibres, which machine discharges residual liquors referred to as "white waters", **characterized in that** the first composition comprises at least a fraction of the "white waters" obtained from the papermaking machine.

**12.** Process according to one of claims 1 to 10, in which a papermaking machine is used to make paper from fibres, which machine discharges residual liquors referred to as "white waters", **characterized in that** the second composition comprises at least a fraction of the "white waters" obtained from the papermaking machine.

**13.** Process according to one of claims 1 to 10, in which a papermaking machine is used to make paper from fibres, which machine discharges residual liquors referred to as "white waters", **characterized in that** it comprises:

- a step of separating the "white waters" into two fractions by filtration. The unfiltered fraction is called "loaded water", the filtered fraction is called "clear water".
- a step of using the "loaded water" to prepare the first composition.
- a step of using the "clear water" to prepare the second composition.

**14.** Process according to one of claims 1 to 13, in which the first composition is a solution of calcium bicarbonate and the second composition is a solution of lime water, **characterized in that** the said compositions are filtered before mixing in order to remove in particular the coloured insoluble residues before the precipitation of the calcium carbonate and to obtain a calcium carbonate with a whiteness of at least 95 (in accordance with the ISO brightness).

**15.** Process according to one of Claims 1 to 14, **characterized in that** the fibres to be treated are present in the form of a fibre suspension in water containing between 1 to 15% of fibres and more particularly preferably between 5 and 10% by weight.

**16.** Complex product containing fibres and fillers which are crystallized on their contact, **characterized in that** it is obtained from the process of one of Claims 1 to 15, and **in that**:

- the crystallized fillers in contact with the fibres are crystals of calcium carbonate attached to the surface of the fibres,
- the said crystals are unitary and distributed evenly over the totality of the surface of the fibres and are not agglomerated or clustered together,
- the said crystals are regular and of a size between 0.1 and 10 $\mu$m and preferably between 0.5 and 5 $\mu$m.

**17.** Complex product according to Claim 16, **character-**

**ized in that** its calcium carbonate content is between 2 and 50% by weight relative to the total solids content and preferably between 2 and 20%.

**18.** Complex product according to Claim 16 or 17, **characterized in that** it is present in the form of a wet sheet.

**19.** Application of the product according to one of claims 16 to 18 to the production of filled papers, especially writing printing papers, newsprint, cigarette paper and fine paper.

FIG.1

Eaux-blanches machine papier → [1]

[1] → Eaux claires → [2]

CaO ↓ [2]

[2] → [3]

[1] → Eaux chargées → [4]

$CO_2$ → [4]

[4] → [5]

Fibres en solution

[5] → [6]

[3] → [6]

[6] → Vers machine papier

EP 1 114 219 B1

FIG.2

FIG.3

FIG.4

FIG.5

FIG.6

FIG.7